# EUROPEAN PATENT SPECIFICATION

(11) **EP 1 482 790 B1**
(45) Date of publication and mention of the grant of the patent: **06.08.2008**
(21) Application number: 03710187.0
(22) Date of filing: 13.03.2003
(51) Int. Cl.: A01N 25/04

(54) **PESTICIDAL COMPOSITION COMPRISING A LACTATE ESTER AS CRYSTAL GROWTH INHIBITOR**
PESTIZIDE ZUSAMMENSETZUNG ENTHALTEND EINEN LAKTAT ESTER ALS KRISTALLWACHSTUMSHEMMER
COMPOSITION PESTICIDE COMPRENANT UN ESTER DE LACTATE COMME INHIBITEUR DE LA CROISSANCE DES CRISTAUX

(30) Priority: 14.03.2002 IL 14868402
(43) Date of publication of application: 08.12.2004
(73) Proprietor: Makhteshim Chemical Works Ltd., IP Dept., 84965 Omer (IL)
(72) Inventor: SASSON, Yoel, 92542 Jerusalem (IL); TOLEDANO, Ofer, 44246 Kfar Saba (IL); LEVI-RUSO, Ganit, 84641 Beer Sheva (IL)
(74) Representative: Modiano, Micaela Nadia
(86) International application number: PCT/IL2003/000222
(87) International publication number: WO 2003/075657

(56) References cited:
- EP-A- 0 357 559
- WO-A-00/18227
- WO-A-93/15605
- WATLING H: "Gibbsite crystallization inhibition - 2. Comparative effects of selected alditols and hydroxycarboxylic acids" HYDROMETALLURGY, ELSEVIER SCIENTIFIC PUBLISHING CY. AMSTERDAM, NL, vol. 55, no. 3, April 2000 (2000-04), pages 289-309, XP004196083 ISSN: 0304-386X
- PATENT ABSTRACTS OF JAPAN vol. 014, no. 314 (C-0737), 5 July 1990 (1990-07-05) & JP 02 108602 A (TOHO CHEM IND CO LTD), 20 April 1990 (1990-04-20)

## Description

### Field of the Invention

The present invention relates to the field of pesticidal compositions, particularly to the use of lactate acid esters as a crystal growth inhibitor in said compositions.

### Background of the Invention

Perhaps the most prevalent practice for applying pesticides to plants is by spraying a liquid composition onto the plant. Some technical difficulties are associated with this practice when predominantly aqueous compositions of pesticides which are essentially water insoluble, are employed. In such cases, often certain parts of the spraying equipment, e.g. filters and nozzles, are clogged as a result of crystal growth of the water-insoluble pesticide in said parts. A particular method for overcoming this problem is by inhibiting or preventing the crystal growth of the pesticide in the sprayer parts by employing a crystal growth inhibitor in the pesticidal composition. U.S. 5,206,225 describes the employment of alkylcarboxylic acid dimethylamides as crystallization inhibitors of azole fungicides. EP0637,202 describes a liquid pesticidal composition containing as crystallization inhibitor an aliphatic carboxylic acid of chain length one to eight carbon atoms, comprising one to three carboxy groups, and optionally substituted by hydroxy. Notwithstanding, the prior art crystallization inhibitors are organic substances which are essentially insoluble in an aqueous medium. Hence, it is necessary to employ an organic co-solvent in which the pesticide and crystal growth inhibitor are soluble. This may present difficulties in terms of environmental safety and phytotoxicity. The current practice in pest control is to reduce the use of organic solvents.

WO 00/35284 describes an aqueous suspension concentrate of triazole fungicides which contains a tristyrylphenol-ethoxylate, phosphate or sulfate thereof, with a vinylpyrrolidon polymer or copolymer thereof, as a crystal growth inhibitor. However, in order to inhibit crystal growth according to WO 00/35284 it is necessary to employ a mixture of crystallization inhibitors; at least a binary mixture thereof.

Furthermore, the crystal growth inhibitors disclosed in the prior publications do not offer a solution for all needs, practices and conditions employed in agriculture. The crystal growth inhibitor may vary in accordance with the active ingredient. Thus, there is an ongoing need to develop further crystal growth inhibitors which overcome the shortcomings of the prior art.

It is therefore a purpose of the present invention to provide a pesticidal composition with a new crystal growth inhibitor.

A further purpose of the present invention is to present the new use of a compound as a crystal growth inhibitor.

Yet a further purpose of the present invention is to provide a method for crystal growth inhibition in pesticidal compositions.

Other objects of the invention will become apparent as the description proceeds.

### Summary of the Invention

The present invention provides a method for preventing crystallization of emulsifiable concentrate (EC) or emulsion in water (EW) pesticidal compositions during application, comprising adding to the composition:
a lactate ester selected from the group consisting of C₄ to C₁₂ saturated and unsaturated alkyl, C₄ to C₁₂ saturated and unsaturated cycloalkyl and C₄ to C₁₂ saturated and unsaturated branched alkyl lactates and mixtures thereof, as a crystallization prevention agent; and
a Rosin derivative selected from the group consisting of rosin gum, rosin esters, modified rosins, hydrogenated rosin esters, polymerized rosin esters and phenolic modified rosin esters or mixtures thereof.

The present invention provides an emulsifiable concentrate (EC) or emulsion in water (EW) pesticidal composition comprising:
one or more pesticide as an active ingredient;
a lactate ester selected from the group consisting of C₄ to C₁₂ saturated and unsaturated alkyl, C₄ to C₁₂ saturated and unsaturated cycloalkyl and C₄ to C₁₂ saturated and unsaturated branched alkyl lactates and mixtures thereof, as a crystal growth inhibitor; and
a Rosin derivative selected from the group consisting of rosin gum, rosin esters, modified rosins, hydrogenated rosin esters, polymerized rosin esters and phenolic modified rosin esters or mixtures thereof.

### Detailed Description of the Invention

The following description is illustrative of embodiments of the invention. The following description is not to be construed as limiting, it being understood that the skilled person may carry out many obvious variations to the invention.

Throughout the description, percentages of components are by weight, unless specifically noted differently. Furthermore, throughout the description "pesticide" refers to insecticides, herbicides, fungicides and mixtures thereof. Throughout the specification the term "azole" or "azole fungicide" also means mixtures thereof.

It has surprisingly been found that esters of lactic acid (LA) are effective as crystal growth inhibitor in liquid emulsifiable concentrate or emulsion in water pesticidal compositions. Throughout the description wherein the term lactic acid, lactate esters and esters of lactic acid are used it is meant to include both optical isomers as well as mixtures thereof. Furthermore, it has surprisingly been found that mixtures of lactate esters with rosin gum, or derivatives thereof selected from among a group comprising of rosin gum, rosin esters, modified rosins, hydrogenated rosin esters, polymerized rosin esters and phenolic modified rosin esters or mixtures thereof (hereinafter "Rosin derivatives") prevent the crystallization in the pesticidal composition.

Pesticides suitable for the practice of the present invention may be, but are not limited to azole fungicides selected from among a group comprising of epoxiconazole, tebuconazole, cyproconazole, prochloraz, penconazole, defenoconazole, flusilazole, metconazole, triadimenol, hexaconazole, flutriafol, triflumizole, fenbuconazole, bromuconazole, fluquinconazole, azaconazole, triticonazole, triadimefon and imibenconazole; strobilurin analogues, e.g. kresoxim-methyl and pyraclostrobin; maneb, mancozeb, ziram, thiram and mixtures thereof.

According to a particular aspect the present invention there is provided a method for preventing crystallization of emulsifiable concentrate (EC) or emulsion in water (EW) pesticidal compositions during application, comprising adding to the composition:
a lactate ester selected from the groups consisting of C₄ to C₁₂ saturated and unsaturated alkyl, C₄ to C₁₂ saturated and unsaturated cycloalkyl and C₄ to C₁₂ saturated and unsaturated branched alkyl lactates and mixtures thereof, as a crystallization prevention agent; and
a Rosin derivative selected from the group consisting of rosin gum, rosin esters, modified rosins, hydrogenated rosin esters, polymerized rosin esters and phenolic modified rosin esters or mixtures thereof.
In the present context the term "prevention" of crystallization also encompasses "inhibition" of crystallization. The lactate ester is added to a pesticidal composition so that the lactate ester is 3% to 80% of the total composition, preferably 20% to 60%. According to yet a further embodiment, a lactate ester is added to a pesticidal composition so that the weight ratio between the pesticide and the lactate ester is from 1:0.2 to 1:5, preferably 1:1 to 1:4. Throughout the description the term lactate ester also encompasses mixtures of lactate esters.

The Rosin derivative is added to a pesticidal composition so that the Rosin derivative is 0.5% to 20% of the total pesticidal composition, preferably 1% to 10%. According to a further embodiment a Rosin derivative may be added so that the weight ratio between the Rosin derivative and the pesticide is from 1:0.05 to 1:1, preferably 1:0.1 to 1:0.5.

According to the present invention, the preferred lactate esters for the practice of the invention are 2-ethyl hexyl lactate, cyclohexyl lactate, 2-methylcyclohexyl lactate, heptyl lactate, octyl lactate and mixtures thereof. The preferred Rosin derivative is rosin gum.

In a particular embodiment of the invention the lactate ester is added to a pesticidal composition in order to prevent crystallization during application, wherein the pesticidal composition contains, subsequent to the addition, 3% to 80%, preferably 10% to 50% of a pesticide selected from among a group comprising of tebuconazole, epoxiconazole and prochloraz and 3% to 80%, preferably 20% to 60% lactate ester selected from among a group comprising of 2-ethyl hexyl lactate, cyclohexyl lactate, 2-methylcyclohexyl lactate, heptyl lactate, octyl lactate and mixtures thereof.

In yet a further particular embodiment of the invention the lactate ester and Rosin derivative are added to a pesticidal composition in order to prevent crystallization during application, wherein the pesticidal composition contains, subsequent to the addition, 3% to 80% , preferably 10% to 50% of a pesticide selected from among a group comprising of tebuconazole, epoxiconazole and prochloraz 3% to 80%, preferably 20% to 60% lactate ester selected from among a group comprising of 2-ethyl hexyl lactate, cyclohexyl lactate, 2-methylcyclohexyl lactate, heptyl lactate, octyl lactate and mixtures thereof, and 0.5% to 20%, preferably 1% to 10% of a Rosin derivative selected from among a group comprising of rosin gum, rosin esters, modified rosins, hydrogenated rosin esters, polymerized rosin esters and phenolic modified rosin esters.

The present invention further provides a pesticidal composition which does not crystallize during application. Said composition comprising a pesticide or mixture of pesticides as active ingredient and a lactate ester. The composition comprising 3% to 80%, preferably 10% to 50% of a pesticide or mixture of pesticides and 3% to 80%, preferably 20% to 60% lactate ester. According to a further embodiment of the invention a pesticidal composition which does not crystallize during application comprises 3% to 80%, preferably 10% to 50% of a pesticide or mixture of pesticides, 3% to 80%, preferably 20% to 60% lactate ester and 0.5% to 20%, preferably 1% to 10% of a Rosin derivative.

According to a preferred embodiment of the invention, the present compositions comprise 10% to 50% pesticide selected from among a group comprising of tebuconazole, epoxiconazole and prochloraz, 20% to 60% of lactate ester selected from among a group comprising of 2-ethyl hexyl lactate, cyclohexyl lactate, 2-methylcyclohexyl lactate, heptyl lactate, octyl lactate and mixtures thereof, and 0.5% to 20% of a Rosin derivative selected from among a group comprising of rosin gum, and methyl ester of rosin gum.

Compositions according to the present invention may further contain surfactant agents, thickeners, anti-foaming agents, dispersing agents and wetting agents.

1% to 40% of the present composition may be surfactant agents wherein non-limiting examples of suitable surface-active compounds are nonionic, cationic and/or anionic surfactants having good emulsifying, dispersing and wetting properties. The term "surfactants" will also be understood as comprising mixtures of surfactants.

Suitable anionic surfactants can be both water-soluble soaps and water-soluble synthetic surface-active compounds. Suitable soaps are the alkali metal salts, alkaline earth metal salts or unsubstituted or substituted ammonium salts of higher fatty acids (C₁₀ -C₂₂), e.g. the sodium or potassium salts of oleic or stearic acid, or of natural fatty acid mixtures which can be obtained, e.g. from coconut oil or tallow oil. Further suitable surfactants are also the fatty acid methyltaurin salts as well as modified and unmodified phospholipids.

More frequently, however, so-called synthetic surfactants are used, especially fatty sulfonates, fatty sulfates, sulfonated benzimidazole derivatives or alkylarylsulfonates.

The fatty sulfonates or sulfates are usually in the form of alkali metal salts, alkali earth metal salts or unsubstituted or substituted ammonium salts and contain a C₈ -C₂₂ alkyl radical which also includes the alkyl moiety of acyl radicals, e.g. the sodium or calcium salt of lignosulfonic acid, of dodecylsulfate, or of a mixture of fatty alcohol sulfates obtained from natural fatty acids. These compounds also comprise the salts of sulfuric acid esters and sulfonic acids of fatty alcohol/ethylene oxide adducts. The sulfonated benzimidazole derivatives preferably contain 2 sulfonic acid groups and one fatty acid radical containing 8 to 22 carbon atoms. Examples of alkylarylsulfonates are the sodium, calcium or triethanolamine salts of dodecylbenzenesulfonic acid, dibutylnaphthalenesulfonic acid, or of a naphthalenesulfonic acid/formaldehyde condensation product. Also suitable are corresponding phosphates, e.g. salts of the phosphoric acid ester of an adduct of p-nonylphenol with 4 to 14 moles of ethylene oxide.

Non-ionic surfactants are preferably polyglycol ether derivatives of aliphatic or cycloaliphatic alcohols, or saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols.

Further suitable non-ionic surfactants are the water-soluble adducts of polyethylene oxide with polypropylene glycol, ethylenediaminopolypropylene glycol and alkylpolypropylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit.

Representative examples of non-ionic surfactants are nonylphenolpolyethoxyethanols, castor oil polyglycol ethers, polypropylene/polyethylene oxide adducts, tributylphenoxypolyethoxyethanol, polyethylene glycol and octylphenoxypolyethoxyethanol. Fatty acid esters of polyoxyethylene sorbitan, e.g. polyoxyethylene sorbitan trioleate, are also suitable non-ionic surfactants.

Cationic surfactants are preferably quaternary ammonium salts which contain, as N-substituent, at least one C₈ -C₂₂ alkyl radical and, as further substituents, unsubstituted or halogenated lower alkyl, benzyl or hydroxy-lower alkyl radicals. The salts are preferably in the form of halides, methylsulfates or ethylsulfates, e.g. stearyltrimethylammonium chloride or benzyldi (2-chloroethyl) ethylammonium bromide, preferably 1% to 40%.

Anti-foaming agents (AF) suitable for use in the present composition are those customarily employed in pesticidal compositions, wherein non-limiting examples of said agents are silicon oils or silicon oil emulsions in water commercially available as, e.g., Dapro DF-1161, wherein 0% to 1% of anti-foaming agent are employed, preferably 0% to 0.2%.

According to a particular aspect of the present invention, the compositions of the present invention can be either aqueous or non-aqueous compositions which contain 0% to 50% water.

### Examples

### Example 1: Non-crystallizing formulation of tebuconazole

| Composition | | |
|---|---|---|
| tebuconazole tech. | - | 200 kg. (204 kg. as 98%) |
| Berol 829¹ | - | 110 kg. |
| Emcol 4500² | - | 50 kg. |
| rosin Gum | - | 30 kg. |
| Soft water | - | 15 kg. |
| AF 100% (DF-1161)³ | - | 0.1 kg. |
| Purasolve EHL(2-ethyl hexyl lactate) | - | up to 1000 liters (about 580 kg.) |

| | | |
|---|---|---|
| ¹ Berol 829 - Castor oil ethoxylated 20 ethylene oxide (EO) ² Emcol 4500 - Na dioctyl sulfosuccinate ³ Anti-foaming - Dapro DF-1161 produced by Daniel products company, NJ | | |

### Preparation:

Charge the Purasolve to the vessel and heat to 50 - 60°C. Add the tebuconazole and rosin gum and mix until homogenous solution is obtained. Cool to ambient temp. and add the Berol, Emcol and AF and mix until homogenous solution is obtained. Add the water, mix for another hour.

### Example 2: Comparative preparation without crystallization inhibitors

| | | |
|---|---|---|
| tebuconazole tech. | - | 200 kg. (204 kg. as 98%) |
| Suprofor 14/ R (ethoxylated castor oil) | - | 90 kg. |
| Witconol NS 500 LQ (EO/POblock co-polymer) | - | 80 kg. |
| rosin Gum | - | 160 kg. |
| Soft water | - | 25 kg. |
| AF 100% (DF-1161) | - | 0.1 kg. |
| NMP (N-Methyl Pyrrolydone) | - | up to 1000 liters |

This formulation was found to crystallize during application.

### Example 3: Formulation of prochloraz

| Composition | | |
|---|---|---|
| prochloraz tech. | - | 450 kg. (464 kg. As 97%) |
| Rosin Gum | - | 30 kg. |
| Berol 829 | - | 140 kg. |
| Emcol 4500 | - | 60 kg. |
| Purasolve EHL | - | up to 1000 litre (about 410 kg.) |

### Example 4: Formulation of a mixture of prochloraz and tebuconazole

| Composition | | |
|---|---|---|
| Tebuconazole tech. | - | 133 kg (136 kg. as 98%) |
| Prochloraz tech. | - | 267 kg (281 kg. as 95%) |
| Emulan EL⁴ | - | 160 kg. |
| Emcol 4500 | - | 40 kg |
| Soft water | - | 15 kg. |
| AF 100% (DF-1161) | - | 0.1 kg. |
| Purasolve EHL | - | up to 1000 liters (about 440 kg.) |

| | | |
|---|---|---|
| ⁴ Emulan EL - Castor oil ethoxylated | | |

### Test of crystal growth inhibition

The formation of crystals in spraying solutions is determined in various conditions in order to assure no crystal formation in various spraying conditions.

10 liters of spraying solutions are prepared using hard water (CIPAC standard water D, 342 ppm) in 3 different concentrations: 0.5, 1, 2 times the recommended spraying concentration for each formulation. Each sample is placed at 3 different temperatures: 2°C, 15°C and 30°C for 24 hours to allow crystal growth. The solutions are sprayed using a personal spraying machine and using two filters (∼8 gr. each): 100 and 50 mesh. After spraying the filters are dried and weighed. A weight difference of the filter before and after spraying of less than 0.05 gr. indicates essentially no crystal growth. Hence, there will not be filter blocking.

## Claims

1. A method for preventing crystallization of emulsifiable concentrate (EC) or emulsion in water (EW) pesticidal compositions during application, comprising adding to the composition:
a lactate ester selected from the group consisting of C₄ to C₁₂ saturated and unsaturated alkyl, C₄ to C₁₂ saturated and unsaturated cycloalkyl and C₄ to C₁₂ saturated and unsaturated branched alkyl lactates and mixtures thereof, as a crystallization prevention agent; and
a Rosin derivative selected from the group consisting of rosin gum, rosin esters, modified rosins, hydrogenated rosin esters, polymerized rosin esters and phenolic modified rosin esters or mixtures thereof.

2. A method according to claim 1 wherein the lactate ester is selected from the group consisting of 2-ethyl hexyl lactate, cyclohexyl lactate, 2-methylcyclohexyl lactate, heptyl lactate, octyl lactate and mixtures thereof.

3. A method according to claim 1 wherein the lactate ester is added to a pesticidal composition so that the lactate ester is 3% to 80% of the total composition

4. A method according to claim 3 wherein the lactate ester is added to a pesticidal composition so that the lactate ester is 20% to 60% of the total composition.

5. A method according to claim 1 wherein the lactate ester is added to a pesticidal composition so that the weight ratio between the pesticide and the lactate ester is from 1:0.1 to 1:5.

6. A method according to claim 5 wherein the lactate ester is added to a pesticidal composition so that the weight ratio between the pesticide and the lactate ester is from 1:1 to 1:4.

7. A method according to claim 1 wherein the Rosin derivative is added so that the Rosin derivative is 0.5% to 20% of the total pesticidal composition

8. A method according to claim 7 wherein the Rosin derivative is added so that the Rosin derivative is 1 % to 10% of the total pesticidal composition.

9. A method according to claim 1 wherein the Rosin derivative may be added so that the weight ratio between the Rosin derivative and the pesticide is from 1:0.05 to 1:1.

10. A method according to claim 9 wherein the Rosin derivative may be added so that the weight ratio between the Rosin derivative and the pesticide is from 1:0.1 1 to 1:0.5.

11. A method according to any one of claims 1 to 10 wherein the pesticidal compositions contain as an active ingredient a pesticide selected from the group consisting of epoxiconazole, tebuconazole, cyproconazle, prochloraz, penconazole, defenoconazole, flusilazole, metconazole, triadimenol, hexaconazole, flutriafol, triflumizole, fenbuconazole, bromuconazole, fluquinconazole, azaconazole, triticonazole, triadimefon and imibenconazole; strobilurin analogues, maneb, mancozeb, zirarn, thiram and mixtures thereof.

12. An emulsifiable concentrate (EC) or emulsion in water (EW) pesticidal composition comprising:
one or more pesticide as an active ingredient;
a lactate ester selected from the group consisting of C₄ to C₁₂ saturated and unsaturated alkyl, C₄ to C₁₂ saturated and unsaturated cycloalkyl and C₄ to C₁₂ saturated and unsaturated branched alkyl lactates and mixtures thereof, as a crystal growth inhibitor; and
a Rosin derivative selected from the group consisting of rosin gum, rosin esters, modified rosins, hydrogenated rosin esters, polymerized rosin esters and phenolic modified rosin esters or mixtures thereof.

13. A composition according to claim 12 wherein the lactate ester is selected from the group consisting of 2-ethyl hexyl lactate, cyclohexyl lactate, 2- methylcyclohexyl lactate, heptyl lactate, octyl lactate and mixtures thereof.

14. A composition according to claim 12 wherein the pesticide is selected from the group consisting of epoxiconazole, tebuconazole, cyproconazole, prochloraz, penconazole, defenoconazole, flusilazole, metconazole, triadimenol, hexaconazole, flutriafol, triflumizole, fenbuconazole, bromuconazole, fluquineonazole, azaconazole, triticonazole, triadimefon and imibenconazole; strobilurin analogues, maneb, mancozeb, ziram, thiram and mixtures thereof.

15. A composition according to claim 12 comprising 3% to 80% lactate ester.

16. A composition according to claim 12 wherein the weight ratio between the pesticide and the lactate ester is from 1:0.1 to 1:5.

17. A composition according to claim 12 wherein the weight ratio between the pesticide and the Rosin derivative is from 1:0.05 to 1:1

18. A composition according to claim 12 comprising 1% to 10% Rosin derivatives.

19. A composition according to claim 12 comprising 20% to 60% of a lactate ester selected from the group consisting of 2-ethyl hexyl lactate, cyclohexyl lactate, 2-methylcyclohexyl lactate, heptyl lactate, octyl lactate and mixtures thereof and 1% to 10% of rosin gum.

## Patentansprüche

1. Ein Verfahren zur Verhinderung der Kristallisation von emulgierbaren Konzentrat- (EC) oder Emulsion-in-Wasser- (EW) Pestizid-Zusammensetzungen während der Anwendung, das das Hinzufügen von folgendem zu der Zusammensetzung umfasst:
einen Lactatester, gewählt aus der Gruppe bestehend aus C₄ bis C₁₂ gesättigtem und ungesättigtem Alkyl, C₄ bis C₁₂ gesättigtem und ungesättigtem Cycloalkyl, und C₄ bis C₁₂ gesättigten und ungesättigten verzweigten Alkyllactaten und Mischungen daraus, als ein Kristallisations-Verhinderungsmittel; und
ein Terpentinharz-Derivat, gewählt aus der Gruppe bestehend aus Balsamharz (Terpentinharzgummi), Harzsäureestern, modifizierten Terpentinharzen, hydrierten Harzsäureestern, polymerisierten Harzsäureestern und phenolischen modifizierten Harzsäureestern oder Mischungen daraus.

2. Ein Verfahren gemäß Anspruch 1, worin der Lactatester gewählt ist aus der Gruppe bestehend aus 2-Ethylhexyllactat, Cyclohexyllactat, 2-Methylcyclohexyllactat, Heptyllactat, Octyllactat und Mischungen daraus.

3. Ein Verfahren gemäß Anspruch 1, worin der Lactatester zu einer Pestizid-Zusammensetzung hinzugefügt wird, so dass der Lactatester 3% bis 80% der Gesamtzusammensetzung ausmacht.

4. Ein Verfahren gemäß Anspruch 3, worin der Lactatester zu einer Pestizid-Zusammensetzung hinzugefügt wird, so dass der Lactatester 20% bis 60% der Gesamtzusammensetzung ausmacht.

5. Ein Verfahren gemäß Anspruch 1, worin ein Lactatester zu einer Pestizid-Zusammensetzung hinzugefügt wird, so dass das Gewichtsverhältnis zwischen dem Pestizid und dem Lactatester von 1:0,1 bis 1:5 ist.

6. Ein Verfahren gemäß Anspruch 5, worin ein Lactatester zu einer Pestizid-Zusammensetzung hinzugefügt wird, so dass das Gewichtsverhältnis zwischen dem Pestizid und dem Lactatester von 1:1 bis 1:4 ist.

7. Ein Verfahren gemäß Anspruch 1, worin das Terpentinharz-Derivat hinzugefügt wird, so dass das Terpentinharz-Derivat 0,5% bis 20% der Gesamt-Pestizid-Zusammensetzung ausmacht.

8. Ein Verfahren gemäß Anspruch 7, worin das Terpentinharz-Derivat hinzugefügt wird, so dass das Terpentinharz-Derivat 1% bis 10% der Gesamt-Pestizid-Zusammensetzung ausmacht.

9. Ein Verfahren gemäß Anspruch 1, worin das Terpentinharz-Derivat hinzugefügt werden kann, so dass das Gewichtsverhältnis zwischen dem Terpentinharz-Derivat und dem Pestizid von 1:0,05 bis 1:1 ist.

10. Ein Verfahren gemäß Anspruch 9, worin das Terpentinharz-Derivat hinzugefügt werden kann, so dass das Gewichtsverhältnis zwischen dem Terpentinharz-Derivat und dem Pestizid von 1:0,1 bis 1:0,5 ist.

11. Ein Verfahren gemäß irgendeinem der Ansprüche 1 bis 10, worin die Pestizid-Zusammensetzungen als einen aktiven Inhaltsstoff ein Pestizid enthalten, der gewählt ist aus der Gruppe bestehend aus Epoxyconazol, Tebuconazol, Cyproconazol, Prochloraz, Penconazol, Defenoconazol, Flusilazol, Metconazol, Triadimenol, Hexaconazol, Flutriafol, Triflumizol, Fenbuconazol, Bromuconazol, Fluquinconazol, Azaconazol, Triticonazol, Triadimefon und Imibenconazol; Strobilurin-Analogen, Maneb, Mancozeb, Ziram, Thiram und Mischungen daraus.

12. Eine emulgierbare Konzentrat- (EC) oder Emulsion-in-Wasser-(EW) Pestizid-Zusammensetzung, die folgendes umfasst:
eines oder mehrere Pestizide als einen aktiven Inhaltsstoff;
einen Lactatester, gewählt aus der Gruppe bestehend aus C₄ bis C₁₂ gesättigtem und ungesättigtem Alkyl, C₄ bis C₁₂ gesättigtem und ungesättigtem Cycloalkyl und C₄ bis C₁₂ gesättigten und ungesättigten verzweigten Alkyllactaten und Mischungen daraus, als einen Kristallwachstumhemmer; und
ein Terpentinharz-Derivat, gewählt aus der Gruppe bestehend aus Balsamharz (Terpentinharzgummi), Harzsäureestern, modifizierten Terpentinharzen, hydrierten Harzsäureestern, polymerisierten Harzsäureestern und phenolischen modifizierten Harzsäureestern oder Mischungen daraus.

13. Eine Zusammensetzung gemäß Anspruch 12, worin der Lactatester gewählt ist aus der Gruppe bestehend aus 2-Ethylhexyllactat, Cyclohexyllactat, 2-Methylcyclohexyllactat, Heptyllactat, Octyllactat und Mischungen daraus.

14. Eine Zusammensetzung gemäß Anspruch 12, worin das Pestizid gewählt ist aus der Gruppe bestehend aus Epoxyconazol, Tebuconazol, Cyproconazol, Prochloraz, Penconazol, Defenoconazol, Flusilazol, Metconazol, Triadimenol, Hexaconazol, Flutriafol, Triflumizol, Fenbuconazol, Bromuconazol, Fluquinconazol, Azaconazol, Triticonazol, Triadimefon und Imibenconazol; Strobilurin-Analogen, Maneb, Mancozeb, Ziram, Thiram und Mischungen daraus.

15. Eine Zusammensetzung gemäß Anspruch 12, die 3% bis 80% Lactatester umfasst.

16. Eine Zusammensetzung gemäß Anspruch 12, worin das Gewichtsverhältnis zwischen dem Pestizid und dem Lactatester von 1:0,1 bis 1:5 ist.

17. Eine Zusammensetzung gemäß Anspruch 12, worin das Gewichtsverhältnis zwischen dem Pestizid und dem Terpentinharz-Derivat von 1:0,05 bis 1:1 ist.

18. Eine Zusammensetzung gemäß Anspruch 12, die 1% bis 10% Terpentinharz-Derivate umfasst.

19. Eine Zusammensetzung gemäß Anspruch 12, die 20% bis 60% eines Lactatesters, gewählt aus der Gruppe bestehend aus 2-Ethylhexyllactat, Cyclohexyllactat, 2-Methylcyclohexyllactat, Heptyllactat, Octyllactat und Mischungen daraus, und 1% bis 10% Balsamharz (Terpentinharzgummi) umfasst.

## Revendications

1. Procédé de prévention de la cristallisation de compositions pesticides sous forme d'un concentré émulsifiable (EC) ou d'une émulsion dans l'eau (EW) pendant l'application, comprenant l'addition à la 5composition :
d'un ester lactate choisi dans le groupe constitué par les lactates d'alkyle en C₄-C₁₂ saturés et insaturés, de cycloalkyle en C₄-C₁₂ saturés et insaturés et d'alkyle en C₄-C₁₂ ramifiés saturés et insaturés, et les mélanges de ceux-ci, en tant qu'agent de prévention de la cristallisation ; et
d'un dérivé de colophane choisi dans le groupe constitué par la gomme de colophane, les esters de colophane, les colophanes modifiées, les esters de colophane hydrogénés, les esters de colophane polymérisés et les esters de colophanes phénoliques modifiés ou les mélanges de ceux-ci.

2. Procédé selon la revendication 1, dans lequel l'ester lactate est choisi dans le groupe constitué par le lactate de 2-éthylhexyle, le lactate de cyclohexyle, le lactate de 2-méthylcyclohexyle, le lactate d'heptyle, le lactate d'octyle et les mélanges de ceux-ci.

3. Procédé selon la revendication 1, dans lequel l'ester lactate est ajouté à la composition pesticide de sorte que l'ester lactate constitue de 3 % à 80 % de la composition totale.

4. Procédé selon la revendication 3, dans lequel l'ester lactate est ajouté à la composition pesticide de sorte que l'ester lactate constitue de 20 % à 60 % de la composition totale.

5. Procédé selon la revendication 1, dans lequel l'ester lactate est ajouté à la composition pesticide de sorte que le rapport en poids du pesticide à l'ester lactate soit de 1:0,1 à 1:5.

6. Procédé selon la revendication 5, dans lequel l'ester lactate est ajouté à la composition pesticide de sorte que le rapport en poids du pesticide à l'ester lactate soit de 1:1 à 1:4.

7. Procédé selon la revendication 1, dans lequel le dérivé de colophane est ajouté de sorte que le dérivé de colophane constitue de 0,5 % à 20 % de la composition pesticide totale.

8. Procédé selon la revendication 7, dans lequel le dérivé de colophane est ajouté de sorte que le dérivé de colophane constitue de 1 % à 10 % de la composition pesticide totale.

9. Procédé selon la revendication 1, dans lequel le dérivé de colophane peut être ajouté de sorte que le rapport en poids du dérivé de colophane au pesticide soit de 1:0,05 à 1:1.

10. Procédé selon la revendication 9, dans lequel le dérivé de colophane peut être ajouté de sorte que le rapport en poids du dérivé de colophane au pesticide soit de 1:0,1 à 1:0,5.

11. Procédé selon l'une quelconque des revendications 1 à 10, dans lequel les compositions pesticides contiennent, en tant qu'ingrédient actif, un pesticide choisi dans le groupe constitué par l'époxiconazole, le tébuconazole, le cyproconazole, le prochloraz, le penconazole, le défénoconazole, le flusilazole, le metconazole, le triadiménol, l'hexaconazole, le flutriafol, le triflurnizole, le fenbuconazole, le bromuconazole, le fluquinconazole, l'azaconazole, le triticonazole, le triadiméfon et l'imibénocanazole ; les analogues de strobilurine, le maneb, le mancozeb, le ziram, le thiram et les mélanges de ceux-ci.

12. Composition pesticide sous forme d'un concentré émulsifiable (EC) ou d'une émulsion dans l'eau (EW), comprenant :
un ou plusieurs pesticides en tant qu'ingrédient actif ;
un ester lactate choisi dans le groupe constitué par les lactates d'alkyle en C₄-C₁₂ saturés et insaturés, de cycloalkyle en C₄-C₁₂ saturés et insaturés et d'alkyle en C₄-C₁₂ ramifiés saturés et insaturés, et les mélanges de ceux-ci, en tant qu'inhibiteur de croissance cristalline ; et
un dérivé de colophane choisi dans le groupe constitué par la gomme de colophane, les esters de colophane, les colophanes modifiées, les esters de colophane hydrogénés, les esters de colophane polymérisés et les esters de colophanes phénoliques modifiés ou les mélanges de ceux-ci.

13. Composition selon la revendication 12, dans laquelle l'ester lactate est choisi dans le groupe constitué par le lactate de 2-éthylhexyle, le lactate de cyclohexyle, le lactate de 2-méthylcyclohexyle, le lactate d'heptyle, le lactate d'octyle et les mélanges de ceux-ci.

14. Composition selon la revendication 12, dans laquelle le pesticide choisi dans le groupe constitué par l'époxiconazole, le tébuconazole, le cyproconazole, le prochloraz, le penconazole, le défénoconazole, le flusilazole, le metconazole, le triadiménol, l'hexaconazole, le flutriafol, le triflurnizole, le fenbuconazole, le bromuconazole, le fluquinconazole, l'azaconazole, le triticonazole, le triadiméfon et l'imibénocanazole ; les analogues de strobilurine, le maneb, le mancozeb, le ziram, le thiram et les mélanges de ceux-ci.

15. Composition selon la revendication 12, comprenant 3 % à 80 % d'ester lactate.

16. Composition selon la revendication 12, dans laquelle le rapport en poids du pesticide à l'ester lactate est de 1:0,1 à 1:5.

17. Composition selon la revendication 12, dans laquelle le rapport en poids du pesticide au dérivé de colophane est de 1:0,05 à 1:1.

18. Composition selon la revendication 12, comprenant 1 % à 10 % de dérivés de colophane.

19. Composition selon la revendication 12, comprenant 20 % à 60 % d'un ester lactate choisi dans le groupe constitué par le lactate de 2-éthylhexyle, le lactate de cyclohexyle, le lactate de 2-méthylcyclohexyle, le lactate d'heptyle, le lactate d'octyle et les mélanges de ceux-ci et de 1 % à 10 % de gomme de colophane.
